# EUROPEAN PATENT SPECIFICATION

(11) **EP 1 698 834 B1**
(45) Date of publication and mention of the grant of the patent: **20.08.2008**
(21) Application number: 06001333.1
(22) Date of filing: 23.01.2006
(51) Int. Cl.: F24F 11/00, H02J 3/14

(54) **Power load control system and control method for multi-unit air conditioners**
Leistungslaststeuerung und Steuerungsverfahren für Klimaanlage
Commande d'une charge de puissance et procédé de commande pour dispositif de conditionnement d'air

(30) Priority: 25.02.2005 KR 2005015930
(43) Date of publication of application: 06.09.2006
(73) Proprietor: LG Electronics, Inc., Seoul 150-010 (KR)
(72) Inventor: Jung, Jae Sik, Seoul 142-108 (KR); Youn, Sang Chul, Seoul 138-200 (KR); Jeon, Duck Gu, Sungdong-ku Seoul 133-070 (KR)
(74) Representative: Vossius & Partner

(56) References cited:
- EP-A- 0 535 631
- US-A1- 2004 255 601
- US-A1- 2005 097 902
- PATENT ABSTRACTS OF JAPAN vol. 013, no. 133 (M-809), 4 April 1989 (1989-04-04) & JP 63 302237 A (DAIKIN IND LTD), 9 December 1988 (1988-12-09)
- PATENT ABSTRACTS OF JAPAN vol. 1995, no. 06, 31 July 1995 (1995-07-31) & JP 07 055225 A (MITSUBISHI ELECTRIC CORP), 3 March 1995 (1995-03-03)

## Description

The present invention relates to a multi-air conditioner peak power control system and a control method thereof wherein a central control unit of a multi-air conditioner system and a demand control unit for monitoring total power consumption in a building in which the multi-air conditioner system is installed are adapted to cooperate with each other to adjust reference power consumption for peak power control of the multi-air conditioner system so that electric power supplied to the building is effectively utilized.

Recently, air conditioners have entered into widespread use. According to such a trend, a multi-type air conditioner has been developed and made commercially available which includes two or more indoor units installed in individual rooms of a home or individual offices of a building, and an outdoor unit connected in common with the indoor units. A plurality of such multi-type air conditioners typically constitute a multi-air conditioner system.

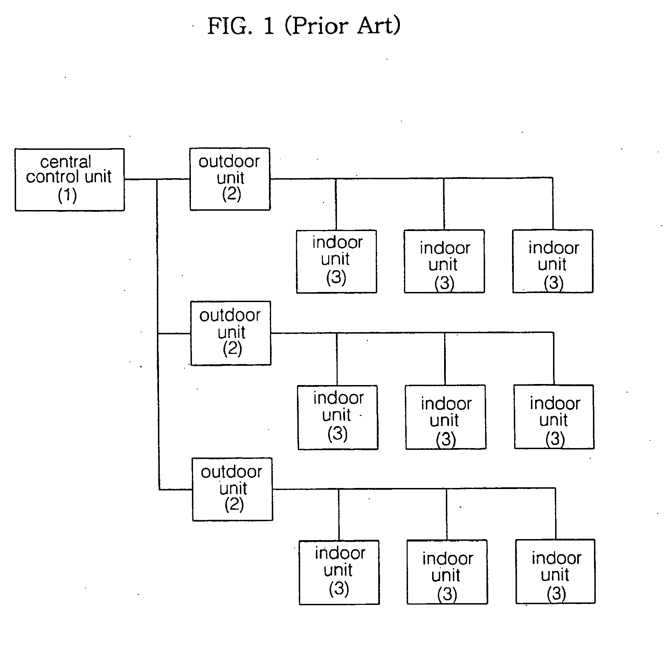

FIG. 1 is a block diagram showing the configuration of a conventional multi-air conditioner central control system.

The conventional multi-air conditioner central control system comprises, as shown in FIG. 1, a multi-air conditioner system including a plurality of indoor units 3 installed in individual rooms and a plurality of outdoor units 2 each of which is connected in common with associated ones of the indoor units 3 to control the flow of a coolant therethrough. The central control system also comprises a central control unit 1 which is connected with the outdoor units 2 via a network so as to control the multi-air conditioner system in an integrated manner.

Each of the outdoor units 2 takes charge of two or more indoor units 3 to control the circulation of a coolant through the associated indoor units 3. If an operation command is inputted to one of the indoor units 3, the associated outdoor unit connected with the indoor unit determines which indoor unit has received what kind of commands and adjusts the amount of coolant condensation to perform a cooling or heating operation in compliance with the inputted operation command.

The central control unit 1 collects, through the outdoor units 2 over the network, state information data regarding the outdoor units 2 and the indoor units 3 connected to the associated outdoor units 2. The central control unit 1 monitors operation states of the entire multi-air conditioner system connected via the network, and sends a desired control command on the basis of monitoring results to a corresponding one of the indoor or outdoor units 3 or 2, which is requested to execute the control command.

The central control unit 1 also performs peak power control, whereby operation rates of the indoor or outdoor units 3 or 2 are adjusted such that power consumption of the indoor and outdoor units 3 and 2 is less than or equal to reference power consumption set in advance for peak power control.

Namely, the central control unit 1 calculates the current power consumption of the multi-air conditioner system. Then, if the calculated current power consumption exceeds the reference power consumption, the central control unit 1 lowers the operation rates of the running indoor and outdoor units 3 and 2 such that the calculated current power consumption does not exceed the reference power consumption. This peak power control approach is disclosed in detail in Korean Patent Application No. 2003-039867 (US 2004/0255601), and thus a further description on this approach is not given here.

However, the conventional multi-air conditioner central control system having the configuration and operational behavior described above can only perform the peak power control of the outdoor units 2 and indoor units 3 connected via the network. Consequently, the central control system cannot perform the peak power control of the multi-air conditioner system relatively to the entire building.

More specifically, total reference power consumption, limiting total power consumption in the entire building where the central control system is installed, can be specified. This total reference, power consumption can be varied according to seasonal or weather conditions.

In the conventional central control system, the reference power consumption for the peak power control is set to a predetermined value in advance. Thus, if the total reference power consumption in the building is varied, a portion thereof allocatable to the central control system must be newly calculated and the reference power consumption must be set to a new value on the basis of this calculation.

However, in the conventional central control system, peak power control of the multi-air conditioner system cannot be rapidly performed in response to the varied total reference power consumption. Because of this, if the total power consumption in the entire building exceeds the total reference power consumption, operations of electric devices equipped in the building may be forcibly interrupted.

It is an object of the present invention to provide a multi-air conditioner peak power control system and a control method thereof wherein peak power control of a multi-air conditioner system is performed in connection with total reference power consumption in a building where the multi-air conditioner system is installed, so that the peak power control is rapidly and efficiently performed even in the case of a variation in the total reference power consumption.

In accordance with an aspect of the present invention, the above and other objects can be accomplished by the provision of a multi-air conditioner peak power control system comprising: a central control unit for controlling a multi-air conditioner system including a plurality of multi-air conditioners each having an outdoor unit and a plurality of indoor units in an integrated manner, and operating the multi-air conditioner system at a reference operation rate; and a demand control unit for sending/receiving data to/from the central control unit to control power consumption of the multi-air conditioner system such that the power consumption is less than total reference power consumption allocated to a building.

Preferably, the multi-air conditioner peak power control system further comprises a power detection unit for detecting total power consumption in the building.

In accordance with another aspect of the present invention, there is provided a control method of a multi-air conditioner peak power control system, comprising the steps of: a) computing total power consumption of a multi-air conditioner system comprising a plurality of multi-air conditioners installed in a building and other electric devices installed therein; and b) comparing the computed total power consumption with total reference power consumption set in advance, and decreasing a reference operation rate of the multi-air conditioner system if the total power consumption is greater than the total reference power consumption.

Preferably, the control method further comprises, after the step b), the step of: c) comparing the decreased reference operation rate with an average operation rate of the multi-air conditioner system, and sending an operation rate decrease control command to the respective multi-air conditioners if the average operation rate is greater than the reference operation rate.

In a feature of the present invention, peak power control of a multi-air conditioner system is performed in connection with total reference power consumption in a building, so that the peak power control is rapidly performed even in the case of a variation in the total reference power consumption, thereby preventing the interruption of power supply to the entire building in the case that power consumption exceeds the total reference power consumption.

The above and other objects, features and other advantages of the present invention will be more clearly understood from the following detailed description taken in conjunction with the accompanying drawings, in which:
FIG. 1 is a block diagram showing the configuration of a conventional multi-air conditioner central control system;
FIG. 2 is a block diagram showing the overall configuration of a multi-air conditioner peak power control system according to the present invention;
FIG. 3 is a block diagram showing the internal configuration of a central control unit of the multi-air conditioner peak power control system according to the present invention;
FIG. 4 is a block diagram showing the internal configurations of a demand control unit and power detection unit of the multi-air conditioner peak power control system according to the present invention;
FIG. 5 is a diagram illustrating an operation screen of the multi-air conditioner peak power control system according to a preferred embodiment of the present invention; and
FIGS. 6A and 6B are flow charts illustrating a control method of the multi-air conditioner peak power control system according to an embodiment of the present invention.

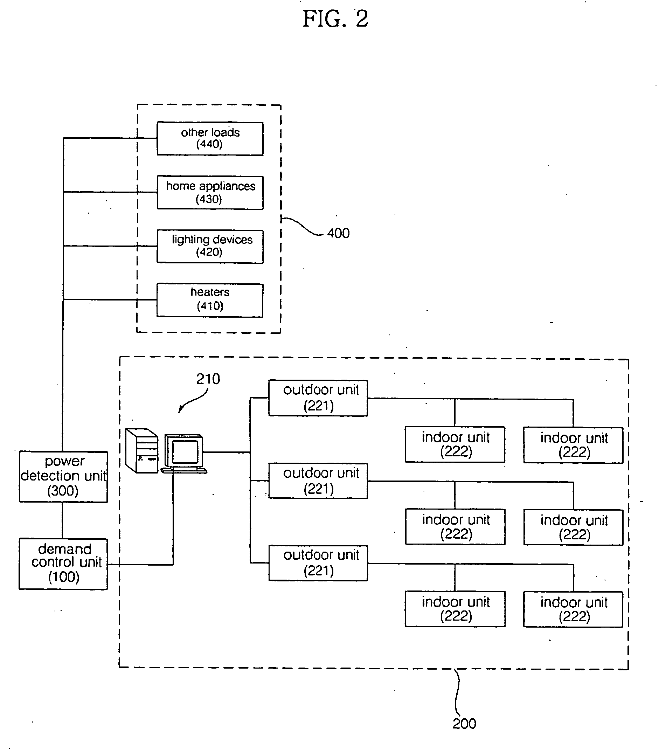

FIG. 2 is a block diagram showing the overall configuration of a multi-air conditioner peak power control system according to the present invention.

The multi-air conditioner peak power control system according to the present invention comprises a multi-air conditioner system 200 including a plurality of outdoor units 221 and a plurality of indoor units 222, other electric devices 400 installed in a building where the multi-air conditioner system 200 is constructed and including a plurality of electric appliances, a power detection unit 300 for detecting total power consumption in the building, and a demand control unit 100 for controlling the total power consumption in the building.

The multi-air conditioner system 200 comprises a plurality of multi-air conditioners (221 and 222), each of which includes a certain one of the outdoor units 221 and two or more ones of the indoor units 222 connected to the certain outdoor unit 221. The multi-air conditioner system 200 is air-conditioning arrangements to provide sufficient cooling and heating capacity for the building. The multi-air conditioner system 200 also comprises a central control unit 210, which is connected with each of the multi-air conditioners (221 and 222) and controls operations of the multi-air conditioners (221 and 222) in an integrated manner. Not only can the indoor units 222 installed in respective rooms of the building be separately controlled, but also the entire multi-air conditioner system 200 in the building can be centrally controlled through the central control unit 210 disposed at a predetermined site.

The indoor units 222 constituting the multi-air conditioners (221 and 222) may be any of a ceiling mounted type, wall mounted type and stand type. Each of the outdoor units 221 connected with the associated indoor units 222 is adapted to control the circulation of a coolant therethrough to perform an air conditioning function in each room in response to an operation control command from the central control unit 210 or an associated indoor unit 222.

The other electric devices 400 comprise home appliances 430 utilized in the rooms such as a refrigerator and a washing machine, lighting devices 420 radiating light such as an incandescent lamp and a fluorescent lamp, heaters 410 radiating heat such as a hot air blower and a radiator, and other loads 440 such as a motor. Each element of the other electric devices 400 consumes a certain amount of electric power supplied thereto to perform a specific operation corresponding thereto.

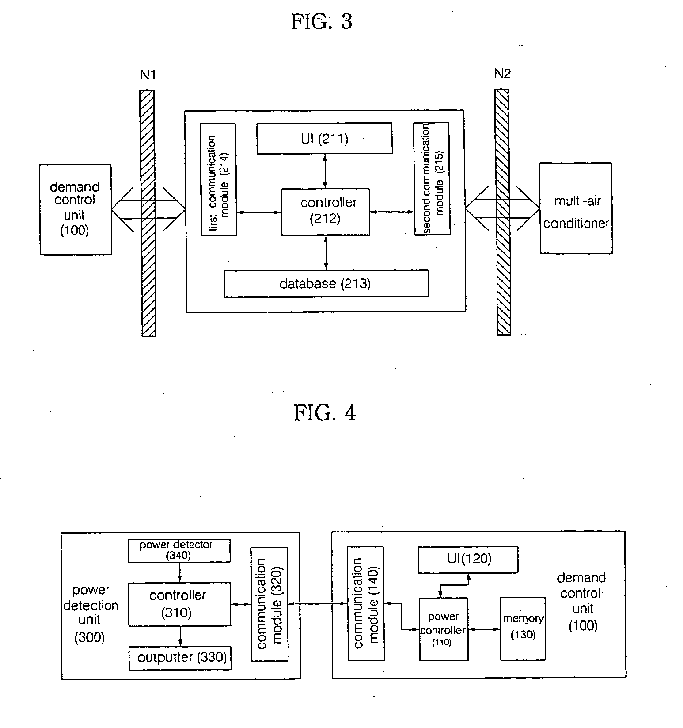

FIG. 3 is a block diagram showing the internal configuration of the central control unit of the peak power control system according to the present invention.

The central control unit 210 of the multi-air conditioner peak power control system according to the present invention basically comprises a user interface (UI) 211 for external data input/output, a controller 212 for sending state information data received from the respective multi-air conditioners (221 and 222) to the UI 211 and creating a control command in response to an operation control command from the UI 211 and sending the created control command to a corresponding multi-air conditioner (221 and 222), and a database 213 for storing specific information data regarding the respective multi-air conditioners (221 and 222) connected with the central control unit 210 and sent and received state information data.

To perform the peak power control of the multi-air conditioner system 200, data transmission and reception operations between the central control unit 210 and the demand control unit 100 are performed via a first network (N1), and data transmission and reception operations between the central control unit 210 and the multi-air conditioners (221 and 222) are performed via a second network (N2). It is preferable that the central control unit 210 is connected with the demand control unit 100 through an Ethernet network, and is connected with the multi-air conditioners (221 and 222) through an RS-485 network.

Consequently, the central control unit 210 further comprises a first communication module 214 and a second communication module 215 to send/receive data to/from the demand control unit 100 and the multi-air conditioners (221 and 222), respectively. It is preferable that the first communication module 214 and the second communication module 215 support an Ethernet protocol and an RS-485 protocol, respectively.

The controller 212 of the central control unit 210 sends/receives data to/from the demand control unit 100 to change reference power consumption set in advance to an initially given or externally inputted value, and adjust operation rates of the respective multi-air conditioners (221 and 222) in accordance with the changed reference power consumption.

Namely, the central control unit 210 sends power consumption data of the multi-air conditioner system 200 to the demand control unit 100, and increases or decreases the operation rates of the respective multi-air conditioners (221 and 222) in response to a control command from the demand control unit 100 in relation to the sent power consumption data.

FIG. 4 is a block diagram showing the internal configurations of the demand control unit and the power detection unit of the peak power control system according to the present invention.

The power detection unit 300 of the peak power control system according to the present invention comprises a power detector 340 for detecting total power consumption in the building, a controller 310 for receiving total power consumption data from the power detector 340 and for sending the received total power consumption data to the demand control unit 100, and an outputter 330 for outputting externally the total power consumption data received from the controller 310.

At this time, the power detection unit 300 can not only detect the total power consumption in the building, but can also separately detect the amount of power consumption of the multi-air conditioner system 200 and the amount of power consumption of the other electric devices 400.

The demand control unit 100 comprises a power controller 110 for interpreting the total power consumption data received from the power detection unit 300 and comparing the extracted total power consumption with the total reference power consumption and sending a desired control command to the central control unit 210 depending upon a result of the comparison, and a memory 130 for storing the total power consumption data received from the power detection unit 300 and the control command sent to the central control unit 210 in relation to the power consumption data.

Here, the total reference power consumption is the maximum amount of power consumption allocated to the building consuming the electric power, and can be varied with seasonal or weather conditions. The total reference power consumption is set to an initially given value at the controller 212 of the central control unit 210 or an externally inputted value.

Namely, the power controller 110 compares the total power consumption from the power detection unit 300 with the total reference power consumption, and sends an operation rate decrement command to the central control unit 210 if the total power consumption is greater than or equal to the total reference power consumption.

The power controller 110 can also compute maximum power consumption of the multi-air conditioner system 200 and send maximum power consumption data to the central control unit 210.

The demand control unit 100 also comprises a user interface (UI) 120 for inputting a new externally supplied value for the total reference power consumption in the case of a change therein and externally outputting power consumption state data regarding electric power consumed by all elements of the multi-air conditioner system 200 and the other electric devices 400. The power detection unit 300 and the demand control unit 100 further comprise a communication module 320 and a communication module 140, respectively, for data transmission and reception operations therebetween.

If the controller 212 of the central control unit 210 receives the operation rate decrement command from the demand control unit 100, it creates a control command to reduce operation rates of all running ones of the multi-air conditioners (221 and 222) and sends the created control command to the running multi-air conditioners (221 and 222), or reduces an operation rate of the multi-air conditioner system 200 by stopping some of the running multi-air conditioners (221 and 222).

If the controller 212 of the central control unit 210 receives the maximum power consumption data from the demand control unit 100, it computes the operation rates of the respective multi-air conditioners (221 and 222) on the basis of the received maximum power consumption data and sends control commands corresponding to the computed operation rates to the associated multi-air conditioners (221 and 222), which are requested to perform the peak power control in response to the control commands, respectively.

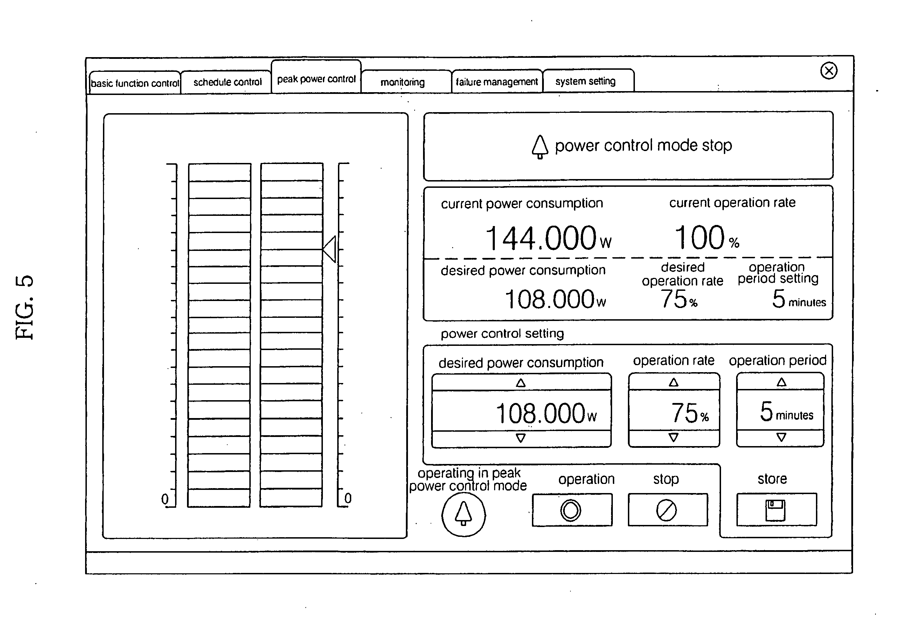

FIG. 5 is a diagram illustrating an operation screen of the peak power control system according to a preferred embodiment of the present invention.

The peak power control system according to the present invention can perform not only the peak power control described above but also other control functions such as schedule management and failure management. If the user selects a window tab associated with a particular control function, state information data regarding the particular control function is displayed in a user-friendly format.

In addition, enable/disable control commands or user setting data for the respective control functions can be inputted through the UI 211 of the central control unit 210.

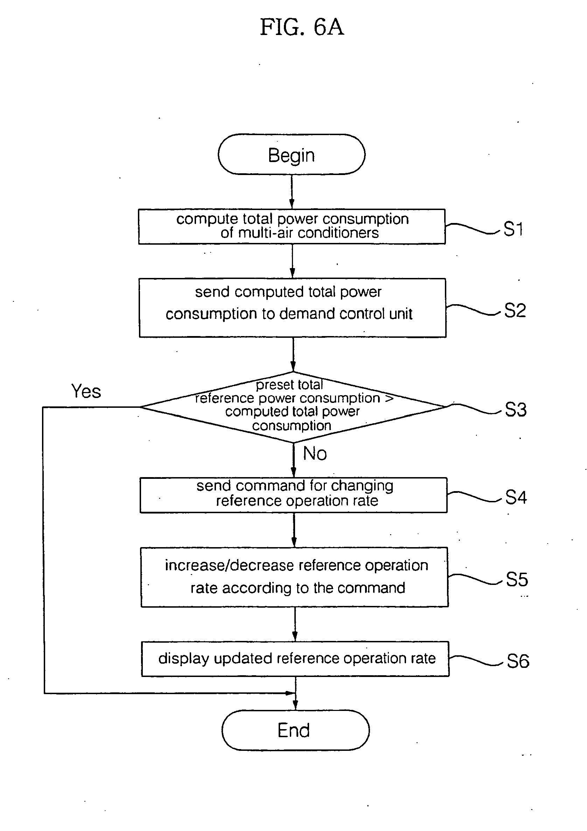

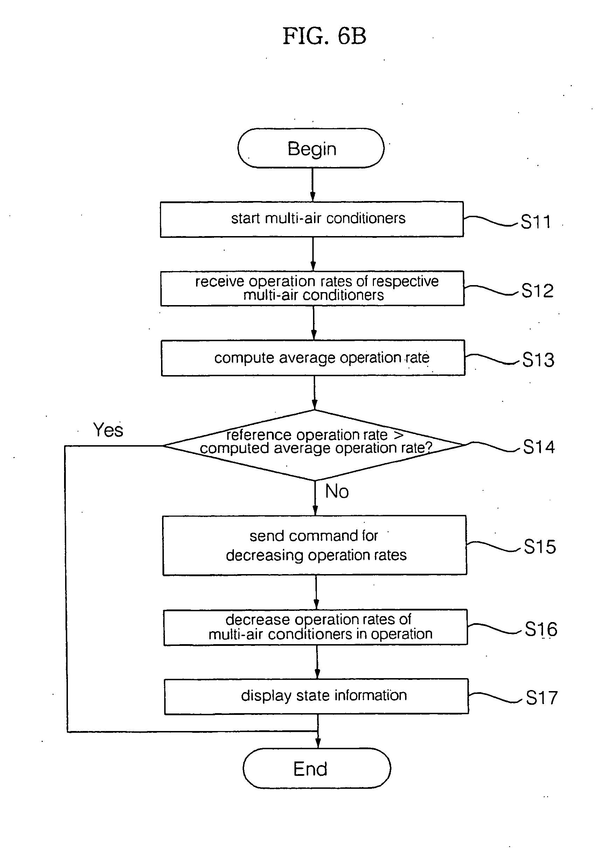

FIGS. 6A and 6B are flow charts illustrating a control method of the peak power control system according to an embodiment of the present invention, wherein FIG. 6A illustrates a process of controlling a reference operation rate, and FIG. 6B illustrates a process of controlling the operation rates of the respective multi-air conditioners on the basis of the reference operation rate controlled by the process of FIG. 6A.

Referring to FIG. 6A, the method for controlling the reference operation rate according to the embodiment of the present invention will be described.

Firstly, total power consumption of the multi-air conditioner system is computed. This total power consumption can be separately sensed through the power detection unit or can be computed through the central control unit utilizing the operation rates of the respective multi-air conditioners (S1).

Next, the total power consumption measured/computed through the power detection unit/the central control unit is sent to the demand control unit (S2).

The demand control unit compares the received total power consumption with total reference power consumption set or inputted in advance therein (S3), and sends a desired operation rate change command according to a result of the comparison to the central control unit.

Namely, if the total power consumption is greater than or equal to the total reference power consumption, the demand control _unit sends the operation rate change command to decrease, by a given amount, the reference operation rate of the multi-air conditioner system for the peak power control, to the central control unit.

If the total power consumption is less than the total reference power consumption, the demand control unit sends an operation rate change command to increase the reference operation rate by a given amount to the central control unit or sends the operation rate change command to maintain the reference operation rate to the central control unit (S4).

Next, the central control unit interprets the operation rate change command received from the demand control unit, increases or decreases the reference operation rate in response to the interpreted command, sends a control command to adjust the number of running multi-air conditioners or operation rates thereof in accordance with the changed reference operation rate, to the corresponding multi-air conditioners (S5).

If the reference operation rate is changed in response to the operation rate change command from the demand control unit, the changed reference operation rate is written to the database of the central control unit to update the reference operation rate and the updated reference operation rate is externally displayed to inform the user.

FIG. 6B illustrates the process of controlling the operation rates of the respective multi-air conditioners on the basis of the reference operation rate controlled by the process of FIG. 6A.

When electric power is turned on to start operation of the multi-air conditioner system (S11), the central control unit receives operation states and operation rates from the respective multi-air conditioners periodically or in the case of changes in the operation states and operation rates thereof (S12).

The central control unit computes an overall average operation rate of the multi-air conditioner system using the received operation rates of the respective multi-air conditioners and externally outputs the computed average operation rate (S13).

The central control unit compares the average operation rate computed as above with the reference operation rate, which has been set in advance on the basis of the total power consumption of the multi-air conditioner system (S14).

If the average operation rate is greater than or equal to the reference operation rate, the central control unit creates a control command to decrease the operation rates of currently running ones of the multi-air conditioners by a given amount and sends the created command to the running multi-air conditioners so that each of the operation rates of the running multi-air conditioners becomes less than or equal to the average operation rate.

If the average operation rate is less than the reference operation rate, the average operation rate is maintained as it is.

At this time, if the reference operation rate is changed by the process of FIG. 6A, the steps described above are repeated. Namely, the central control unit determines if a newly computed current average operation rate is less than the changed reference operation rate, and if not, the central control unit performs an appropriate operation to decrease the operation rates of the running multi-air conditioners by a given amount.

Next, the operation rates of the respective running multi-air conditioners are adjusted in response to the sent control command. A new average operation rate is computed using the operation rates from the running multi-air conditioners. If the computed average operation rate is less than the reference operation rate, the running multi-air conditioners maintain the current operation rates, respectively. Otherwise, the operation rates of the running multi-air conditioners are adjusted again (S16).

Finally, the operation rates of the respective multi-air conditioners, and the total power consumption, average operation rate and reference operation rate of the entire multi-air conditioner system are externally displayed to inform the user of the same.

As apparent from the above description, the present invention provides a multi-air conditioner peak power control system and a control method thereof. The peak power control system comprises a demand control unit for controlling total power consumption in an entire building, and a central control unit for sending/receiving data to/from the demand control unit to control power consumption of a multi-air conditioner system. The control method of the peak power control system controls the total power consumption in the building such that it does not exceed the total reference power consumption in a more efficient and convenient way, thereby reducing excessive cost burden due to over-consumption of power and significantly enhancing user convenience.

## Claims

1. A multi-air conditioner peak power control system, comprising:
a central control unit (210) for controlling a multi-air conditioner system (200) including a plurality of multi-air conditioners (221 and 222) each having an outdoor unit (221) and a plurality of indoor units (222) in an integrated manner, and operating the multi-air conditioner system (200) at a reference operation rate; and
a demand control unit (100) for sending/receiving data to/from the central control unit (210) to control power consumption of the multi-air conditioner system (200) such that the power consumption is less than total reference power consumption allocated to a building,
**characterized in that** the demand control unit (100) includes a power controller (110) comparing the total power consumption in the building with the total reference power consumption set to an initially given or externally inputted value, and sending a control command to change the reference operation rate of the multi-air conditioner system (200) to the central control unit (210) on the basis of a result of comparison between the total power consumption in the building and the total reference power consumption.

2. The multi-air conditioner peak power control system as set forth in claim 1, further comprising a power detection unit (300) for detecting total power consumption in the building.

3. The multi-air conditioner peak power control system as set forth in claim 1 or 2, wherein the central control unit (210) sends/receives data to/from the demand control unit (100) via a first network (N1), and the central control unit (210) sends/receives data to/from the multi-air conditioner system (200) via a second network (N2).

4. The multi-air conditioner peak power control system as set forth in claim 3, wherein the first network (N1) is an Ethernet network and the second network (N2) is an RS-485 network.

5. The multi-air conditioner peak power control system as set forth in claim 1, wherein the demand control unit (100) further includes a memory (130) for storing the total reference power consumption and the total power consumption.

6. The multi-air conditioner peak power control system as set forth in claim 1, wherein if the total power consumption is greater than or equal to the total reference power consumption, the power controller (110) sends a control command to decrease the reference operation rate to the central control unit (210), and otherwise, the power controller (110) sends a control command to increase the reference operation rate or a control command to keep the reference operation rate constant to the central control unit (210).

7. The multi-air conditioner peak power control system as set forth in any of claims 1 to 6, wherein the central control unit (210) includes a controller (212) which updates the reference operation rate in response to a command to change the reference operation rate from the demand control unit (100), and adjusts operation rates of the respective multi-air conditioners (221 and 222) in accordance with the updated reference operation rate.

8. The multi-air conditioner peak power control system as set forth in claim 7, wherein the central control unit (210) further includes a database (213) for storing state information data regarding the respective multi-air conditioners (221 and 222) and the reference operation rate.

9. The multi-air conditioner peak power control system as set forth in claim 7, wherein the controller (212) includes a peak power control module for adjusting the operation rates of the respective multi-air conditioners (221 and 222) according to the reference operation rate, a schedule control module for operating the respective multi-air conditioners (221 and 222) at set day and times or frequencies, and a failure management module for analyzing the state information data regarding the respective multi-air conditioners (221 and 222) to examine an occurrence of failure in each outdoor unit 221 or indoor unit 222.

10. The multi-air conditioner peak power control system as set forth in claim 9, wherein the peak power control module computes an average operation rate of the multi-air conditioner system (200) utilizing the state information data from the respective multi-air conditioners (221 and 222), and sends an operation rate decrease control command to the respective multi-air conditioners (221 and 222) if the computed average operation rate is greater than or equal to the reference operation rate.

11. A control method of a multi-air conditioner peak power control system, comprising the steps of:
a) computing total power consumption of a multi-air conditioner system comprising a plurality of multi-air conditioners installed in a building and other electric devices installed therein (S1); and
b) comparing the computed total power consumption with total reference power consumption set in advance, and decreasing a reference operation rate of the multi-air conditioner system if the total power consumption is greater than the total reference power consumption (S2 to S4);
**characterized by**
c) comparing the decreased reference operation rate with an average operation rate of the multi-air conditioner system, and sending an operation rate decrease control command to the respective multi-air conditioners if the average operation rate is greater than the reference operation rate (S5, S6).

## Patentansprüche

1. Mehrfach-Klimaanlagenspitzenleistungssteuerung, die aufweist:
eine zentrale Steuereinheit (210) zur Steuerung eines Mehrfach-Klimaanlagensystems (200), das mehrere Mehrfach-Klimaanlagen (221 und 222) aufweist, die in einer integrierten Weise jeweils eine Außeneinheit (221) und mehrere Inneneinheiten (222) aufweisen, und zum Betreiben des Mehrfach-Klimaanlagensystems (200) mit einem Bezugsleistungsgrad; und
eine Bedarfssteuereinheit (100) zum Senden/Empfangen von Daten an/von der zentralen Steuereinheit (210), um die Leistungsaufnahme des Mehrfach-Klimaanlagensystems (200) so zu steuern, daß die Leistungsaufnahme kleiner als die Gesamtbezugsleistungsaufnahme ist, die einem Gebäude zugewiesen ist,
**dadurch gekennzeichnet, daß** die Bedarfssteuereinheit (100) eine Leistungssteuereinrichtung (110) aufweist, die die Gesamtleistungsaufnahme im Gebäude mit der Gesamtbezugsleistungsaufnahme vergleicht, die auf einen anfänglich vorgegebenen oder von außen eingegebenen Wert eingestellt ist, und auf der Grundlage eines Ergebnisses des Vergleichs zwischen der Gesamtleistungsaufnahme im Gebäude und der Gesamtbezugsleistungsaufnahme einen Steuerbefehl an die zentrale Steuereinheit (210) sendet, den Bezugsleistungsgrad des Mehrfach-Klimaanlagensystems (200) zu ändern.

2. Mehrfach-Klimaanlagenspitzenleistungssteuerung nach Anspruch 1, die ferner eine Leistungsermittlungseinheit (300) zur Ermittlung der Gesamtleistungsaufnahme im Gebäude aufweist.

3. Mehrfach-Klimaanlagenspitzenleistungssteuerung nach Anspruch 1 oder 2, wobei die zentrale Steuereinheit (210) über ein erstes Netzwerk (N1) Daten an die/von der Bedarfssteuereinheit (100) sendet/empfängt, und die zentrale Steuereinheit (210) über ein zweites Netzwerk (N2) Daten an das/vom Mehrfach-Klimaanlagensystem (200) sendet/empfängt.

4. Mehrfach-Klimaanlagenspitzenleistungssteuerung nach Anspruch 3, wobei das erste Netzwerk (N1) ein Ethernet-Netzwerk ist und das zweite Netzwerk (N2) ein RS-485-Netzwerk ist.

5. Mehrfach-Klimaanlagenspitzenleistungssteuerung nach Anspruch 1, wobei die Bedarfssteuereinheit (100) ferner einen Speicher (130) zum Speichern der Gesamtbezugsleistungsaufnahme und der Gesamtleistungsaufnahme aufweist.

6. Mehrfach-Klimaanlagenspitzenleistungssteuerung nach Anspruch 1, wobei dann, wenn die Gesamtleistungsaufnahme größer oder gleich der Gesamtbezugsleistungsaufnahme ist, die Leistungssteuereinrichtung (110) einen Steuerbefehl, den Bezugsleistungsgrad zu senken, an die zentrale Steuereinheit (210) sendet, und die Leistungssteuereinrichtung (110) andernfalls einen Steuerbefehl, den Bezugsleistungsgrad zu erhöhen, oder einen Steuerbefehl, den Bezugsleistungsgrad konstant zu halten, an die zentrale Steuereinheit (210) sendet.

7. Mehrfach-Klimaanlagenspitzenleistungssteuerung nach einem der Ansprüche 1 bis 6, wobei die zentrale Steuereinheit (210) eine Steuereinrichtung (212) aufweist, die als Reaktion auf einen Befehl aus der Bedarfssteuereinheit (100), den Bezugsleistungsgrad zu ändern, den Bezugsleistungsgrad aktualisiert, und die Leistungsgrade der jeweiligen Mehrfach-Klimaanlagen (221 und 222) gemäß des aktualisierten Bezugsleistungsgrads regelt.

8. Mehrfach-Klimaanlagenspitzenleistungssteuerung nach Anspruch 7, wobei die zentrale Steuereinheit (210) ferner eine Datenbank (213) zum Speichern von Zustandsinformationsdaten bezüglich der jeweiligen Mehrfach-Klimaanlagen (221 und 222) und des Bezugsleistungsgrads aufweist.

9. Mehrfach-Klimaanlagenspitzenleistungssteuerung nach Anspruch 7, wobei die Steuereinrichtung (212) aufweist: ein Spitzenleistungssteuermodul zur Regelung der Leistungsgrade der jeweiligen Mehrfach-Klimaanlagen (221 und 222) gemäß des Bezugsleistungsgrads, ein Zeitplansteuermodul zum Betreiben der jeweiligen Mehrfach-Klimaanlagen (221 und 222) zu festgelegten Tagen und Zeiten oder Häufigkeiten, und ein Fehlerverwaltungsmodul zur Analyse der Zustandsinformationsdaten bezüglich der jeweiligen Mehrfach-Klimaanlagen (221 und 222), um ein Auftreten eines Fehlers in jeder Außeneinheit (221) oder Inneneinheit (222) zu untersuchen.

10. Mehrfach-Klimaanlagenspitzenleistungssteuerung nach Anspruch 9, wobei das Spitzenleistungssteuermodul einen Durchschnittsleistungsgrad des Mehrfach-Klimaanlagensystems (200) unter Nutzung der Zustandsinformationsdaten aus den jeweiligen Mehrfach-Klimaanlagen (221 und 222) berechnet, und einen Leistungsgradsenkungssteuerbefehl an die jeweiligen Mehrfach-Klimaanlagen (221 und 222) sendet, wenn der berechnete Durchschnittsleistungsgrad größer oder gleich dem Bezugsleistungsgrad ist.

11. Steuerverfahren einer Mehrfach-Klimaanlagenspitzenleistungssteuerung, das die Schritte aufweist:
a) Berechnen einer Gesamtleistungsaufnahme eines Mehrfach-Klimaanlagensystems, das mehrere Mehrfach-Klimaanlagen, die in einem Gebäude installiert sind, und andere elektrische Vorrichtungen aufweist, die darin installiert sind (S1); und
b) Vergleichen der berechneten Gesamtleistungsaufnahme mit einer im voraus festgelegten Gesamtbezugsleistungsaufnahme und Senken eines Bezugsleistungsgrads des Mehrfach-Klimaanlagensystems, wenn die Gesamtleistungsaufnahme größer als die Gesamtbezugsleistungsaufnahme ist (S2 bis S4);
**gekennzeichnet durch**
c) Vergleichen des gesenkten Bezugsleistungsgrads mit einem Durchschnittsleistungsgrad des Mehrfach-Klimaanlagensystems, und Senden eines Leistungsgradssenkungssteuerbefehls an die jeweiligen Mehrfach-Klimaanlagen, wenn der Durchschnittsleistungsgrad größer als der Bezugsleistungsgrad ist (S5, S6).

## Revendications

1. Système de régulation de puissance de pointe de conditionneur d'air à unités multiples, comprenant :
une unité de régulation centrale (210) pour réguler un système de conditionneur d'air à unités multiples (200) incluant une pluralité de conditionneurs d'air à unités multiples (221 et 222) ayant chacun une unité extérieure (221) et une pluralité d'unités intérieures (222) d'une manière intégrée, et exploiter le système de conditionneur d'air à unités multiples (200) à une vitesse de fonctionnement de référence ; et
une unité de régulation de demande (100) pour envoyer/recevoir des données à/de l'unité de régulation centrale (210) pour réguler la consommation de puissance du système de conditionneur d'air à unités multiples (200) de manière à ce que la consommation de puissance soit inférieure à la consommation de puissance de référence totale allouée à un bâtiment, **caractérisé en ce que** l'unité de régulation de demande (100) inclut un régulateur de puissance (110) comparant la consommation de puissance totale dans le bâtiment avec la consommation de puissance de référence totale fixée à une valeur donnée au préalable ou saisie de l'extérieur, et envoyant une commande de régulation pour changer la vitesse de fonctionnement de référence du système de conditionneur d'air à unités multiples (200) à l'unité de régulation centrale (210) sur la base d'un résultat de la comparaison entre la consommation de puissance totale dans le bâtiment et la consommation de puissance de référence totale.

2. Système de régulation de puissance de pointe de conditionneur d'air à unités multiples selon la revendication 1, comprenant en outre une unité de détection de puissance (300) pour détecter la consommation de puissance totale dans le bâtiment.

3. Système de régulation de puissance de pointe de conditionneur d'air à unités multiples selon la revendication 1 ou 2, dans lequel l'unité de régulation centrale (210) envoie/reçoit des données à/de l'unité de régulation de demande (100) par l'intermédiaire d'un premier réseau (N1), et l'unité de régulation centrale (210) envoie/reçoit des données au/du système de conditionneur d'air à unités multiples (200) par l'intermédiaire d'un deuxième réseau (N2).

4. Système de régulation de puissance de pointe de conditionneur d'air à unités multiples selon la revendication 3, dans lequel le premier réseau (N1) est un réseau Ethernet et le deuxième réseau (N2) est un réseau RS-485.

5. Système de régulation de puissance de pointe de conditionneur d'air à unités multiples selon la revendication 1, dans lequel l'unité de régulation de demande (100) inclut en outre une mémoire (130) pour stocker la consommation de puissance de référence totale et la consommation de puissance totale.

6. Système de régulation de puissance de pointe de conditionneur d'air à unités multiples selon la revendication 1, dans lequel si la consommation de puissance totale est supérieure ou égale à la consommation de puissance de référence totale, le régulateur de puissance (110) envoie une commande de régulation pour diminuer la vitesse de fonctionnement de référence à l'unité de régulation centrale (210), et sinon, le régulateur de puissance (110) envoie une commande de régulation pour augmenter la vitesse de fonctionnement de référence ou une commande de régulation pour maintenir la vitesse de fonctionnement de référence constante à l'unité de régulation centrale (210).

7. Système de régulation de puissance de pointe de conditionneur d'air à unités multiples selon l'une quelconque des revendications 1 à 6, dans lequel l'unité de régulation centrale (210) inclut un régulateur (212) qui met à jour la vitesse de fonctionnement de référence en réponse à une commande pour changer la vitesse de fonctionnement de référence provenant de l'unité de régulation de demande (100), et ajuste les vitesses de fonctionnement des conditionneurs d'air à unités multiples (221 et 222) respectifs conformément à la vitesse de fonctionnement de référence mise à jour.

8. Système de régulation de puissance de pointe de conditionneur d'air à unités multiples selon la revendication 7, dans lequel l'unité de régulation centrale (210) inclut en outre une base de données (213) pour stocker des données d'information d'état relatives aux conditionneurs d'air à unités multiples (221 et 222) respectifs et la vitesse de fonctionnement de référence.

9. Système de régulation de puissance de pointe de conditionneur d'air à unités multiples selon la revendication 7, dans lequel le régulateur (212) inclut un module de régulation de puissance de pointe pour ajuster les vitesses de fonctionnement des conditionneurs d'air à unités multiples (221 et 222) respectifs conformément à la vitesse de fonctionnement de référence, un module de régulation par programme pour faire fonctionner les conditionneurs d'air à unités multiples (221 et 222) respectifs selon des jours et des heures ou des fréquences fixé(e)s, et un module de gestion de défaillances pour analyser les données d'information d'état relatives aux conditionneurs d'air à unités multiples (221 et 222) respectifs pour examiner l'apparition d'une défaillance dans chaque unité extérieure 221 ou unité intérieure 222.

10. Système de régulation de puissance de pointe de conditionneur d'air à unités multiples selon la revendication 9, dans lequel le module de régulation de puissance de pointe calcule une vitesse de fonctionnement moyenne du système de conditionneur d'air à unités multiples (200) en utilisant les données d'information d'état provenant des conditionneurs d'air à unités multiples (221 et 222) respectifs, et envoie une commande de régulation à la baisse de la vitesse de fonctionnement aux conditionneurs d'air à unités multiples (221 et 222) respectifs si la vitesse de fonctionnement moyenne calculée est supérieure ou égale à la vitesse de fonctionnement de référence.

11. Procédé de régulation d'un système de régulation de puissance de pointe de conditionneur d'air à unités multiples, comprenant les étapes de :
a) calculer la consommation de puissance totale d'un système de conditionneur d'air à unités multiples comprenant une pluralité de conditionneurs d'air à unités multiples installés dans un bâtiment et autres dispositifs électriques installés dans celui-ci (S1) ; et
b) comparer la consommation de puissance totale calculée avec une consommation de puissance de référence totale fixée au préalable, et diminuer une vitesse de fonctionnement de référence du système de conditionneur d'air à unités multiples si la consommation de puissance totale est supérieure à la consommation de puissance de référence totale (S2 à S4) ;
**caractérisé par**
c) comparer la vitesse de fonctionnement de référence diminuée avec une vitesse de fonctionnement moyenne du système de conditionneur d'air à unités multiples, et envoyer une commande de régulation à la baisse de la vitesse de fonctionnement aux conditionneurs d'air à unités multiples respectifs si la vitesse de fonctionnement moyenne est supérieure à la vitesse de fonctionnement de référence (S5, S6).
